# EUROPÄISCHE PATENTSCHRIFT

(11) **EP 3 577 435 B1**
(45) Veröffentlichungstag und Bekanntmachung des Hinweises auf die Patenterteilung: **18.11.2020**
(21) Anmeldenummer: 18707243.4
(22) Anmeldetag: 01.02.2018
(51) Int. Cl.: G01N 15/06, G01N 15/00

(54) **SENSOR UND DESSEN HERSTELLUNGSVERFAHREN ZUR VERWENDUNG IN EINEM ABGASSTROM EINER BRENNKRAFTMASCHINE**
SENSOR AND PRODUCTION METHOD THEREFOR FOR USE IN AN EXHAUST GAS STREAM OF AN INTERNAL COMBUSTION ENGINE
CAPTEUR ET SON PROCÉDÉ DE FABRICATION POUR UTILISATION DANS UN FLUX DE GAZ D'ÉCHAPPEMENT D'UN MOTEUR À COMBUSTION INTERNE

(30) Priorität: 03.02.2017 DE 102017201724
(43) Veröffentlichungstag der Anmeldung: 11.12.2019
(73) Patentinhaber: Vitesco Technologies GmbH, 30165 Hannover (DE)
(72) Erfinder: HAMANN, Christoph, 93107 Thalmassing (DE); SCHWARZKOPF, Kay, 93128 Regensburg (DE); KOHN, Stefan, 92277 Hohenburg (DE); GUGEL, Hajo, 93049 Regensburg (DE); WALDE, Tim, 93057 Regensburg (DE); KIEFL, Christian, 94377 Münster (DE)
(74) Vertreter: Waldmann, Georg Alexander
(86) Internationale Anmeldenummer: PCT/EP2018/052564
(87) Internationale Veröffentlichungsnummer: WO 2018/141870

(56) Entgegenhaltungen:
- WO-A1-2012/161754
- DE-A1- 10 117 189
- DE-A1-102005 021 131
- US-A- 4 656 832

## Beschreibung

Die vorliegende Erfindung betrifft einen elektrostatischen Partikelsensor zur Verwendung in einem Abgasstrom einer Brennkraftmaschine und ein Verfahren zum Herstellen desselben, insbesondere einen im Abgasstrom einer Brennkraftmaschine eingesetzten Partikelsensor zur Ermittlung der Partikelmenge im Abgas der Brennkraftmaschine.

Im Abgas einer Brennkraftmaschine werden Sensoren für unterschiedlichste Zwecke angeordnet. Beispielsweise werden Partikelsensoren, Stickoxidsensoren, Sauerstoffsensoren und/oder Lambdasonden eingesetzt, um unterschiedliche Parameter zu erfassen und um die Betriebsparameter der Brennkraftmaschine optimiert einstellen zu können. In solchen Sensoren werden häufig elektrische und elektronische Bauteile verwendet, an denen im Messbetrieb häufig unterschiedliche elektrische Potentiale angelegt werden.

Es ist bekannt, in solchen Sensoren Glaslote und Glasisolationen als elektrische Isolatoren zu verwenden. Bei der Herstellung bzw. Formgebung der Glasisolationen wird das Glaslot gemeinsam mit den voneinander zu isolierenden Elektroden in eine Form gegeben. Zur Formgebung während des Fertigformens des Glaslots zu einer Glasisolation bei einer vorbestimmten Temperatur für eine vorbestimmte Zeitdauer werden für gewöhnlich Graphitformelemente, wie z. B. Graphitringe, eingesetzt, die während des Fertigformens mit dem aushärtenden Glaslot in Kontakt stehen und somit die Form der herzustellen Glasisolationen definieren. Jedoch kann sich dabei zumindest teilweise Graphit aus den Graphitformelementen lösen und sich auf dem Glaslot bzw. der fertigen Glasisolation ablegen, so dass sich auch nach einem Entfernen der Graphit formelemente zumindest teilweise Graphit auf der Glasisolation befinden kann. Dieses sich auf der Glasisolation abgelegte Graphit kann die elektrische Isolationseigenschaft der Glasisolation negativ beeinträchtigen.

Aus der DE 101 17 189 A1 ist eine Sensoranordnung zur Indikation und/oder Bestimmung der Konzentration von gasförmigen Bestandteilen in einem Messgasgemisch und ein entsprechendes Verfahren bekannt.

Die DE 10 2005 021 131 A1 offenbart ein Sensorelement für Gassensoren zur Bestimmung von Partikeln in Gasgemischen.

Der vorliegenden Erfindung liegt die Aufgabe zugrunde, einen elektrostatischen Partikelsensor vorzusehen, der im Abgas einer Brennkraftmaschine zuverlässig eingesetzt werden kann und bei dem die elektrischen Isolationseigenschaften von zumindest einer innerhalb des Sensors vorhandenen Glaslotisolation dauerhaft gewährleistet werden kann.

Diese Aufgabe wird mit einem Verfahren gemäß unabhängigem Anspruch 1 und mit einem elektrostatischen Partikelsensor gemäß unabhängigem Anspruch 5 gelöst. Bevorzugte Ausgestaltungen sind in den Unteransprüchen angegeben.

Der vorliegenden Erfindung liegt im Wesentlichen der Gedanke zu Grunde, bei elektrostatischen Partikelsensoren, die im Abgasstrom einer Brennkraftmaschine verwendet werden, während des Herstellungsprozesses Glaslote als Glasisolationen vorzusehen und bei dem Fertigformprozess der Glaslote zur Glasisolation anstelle von Graphitformelementen Isolationselemente zu verwenden, die vorzugsweise nach dem Fertigformen der Glasisolation innerhalb des elektrostatischen Partikelsensors verbleiben und zusätzlich die Funktion eines Korrosionsschutzes der hergestellten Glasisolation bereitstellen können. Die verwendeten Isolationselemente zeichnen sich insbesondere durch einen sehr hohen elektrischen Widerstand aus, beispielsweise einem spezifischen Widerstand bei Raumtemperatur, der größer ist als 10¹¹ [Ωm].

Gemäß einem ersten Aspekt der vorliegenden Erfindung ist ein Verfahren zum Herstellen eines elektrostatischen Partikelsensors vorgesehen, der dazu ausgebildet ist, in einem Abgasstrang einer Brennkraftmaschine verwendet zu werden. Der elektrostatische Partikelsensor weist zumindest eine sich entlang einer Längsachse erstreckenden erste Elektrode und zumindest eine von der ersten Elektrode beabstandete und koaxial um die zumindest eine erste Elektrode angeordnete zweite Elektrode auf. Das erfindungsgemäße Verfahren umfasst ein Anordnen von zumindest einem Glaslot in einer Form derart, dass sich das zumindest eine Glaslot von der zumindest einen ersten Elektrode zu der zumindest einen zweiten Elektrode radial erstreckt und die zumindest eine erste Elektrode von der zumindest einen zweiten Elektrode elektrisch isoliert. Das erfindungsgemäße Verfahren umfasst ferner ein Anordnen von zumindest einem Isolationselement in der Form derart, dass das zumindest eine Isolationselement mit zumindest einem Bereich einer axialen Seitenfläche des zumindest einen Glaslots in Kontakt steht. Außerdem umfasst das erfindungsgemäße Verfahren ein Fertigformen des zumindest einen Glaslots zu zumindest einer Glasisolation derart, dass die zumindest eine Glasisolation zusammen mit dem zumindest einen Isolationselement relativ zu der zumindest einen ersten Elektrode und der zumindest einen zweiten Elektrode in einer vorbestimmten Position positioniert ist. Das Isolationselement ist dazu ausgebildet, während dem Fertigformen der zumindest einen Glasisolation die zumindest eine Glasisolation zumindest teilweise zu formen und während eines Messbetriebs des Sensors die zumindest eine Glasisolation zumindest teilweise vom Abgas der Brennkraftmaschine zu isolieren.

Vorzugsweise verbleibt das zumindest eine Isolationselement innerhalb des elektrostatischen Partikelsensors und kann zumindest teilweise verhindern, dass das in den elektrostatischen Partikelsensor einströmende Abgas die Glasisolation korrodiert. Somit kann durch das zumindest eine Isolationselement teilweise ein Korrosionsschutz für die zumindest eine Glasisolation bereitgestellt werden und die Langlebigkeit der elektrischen Isolation der Glasisolation verbessern.

In einer vorteilhaften Ausgestaltung des erfindungsgemäßen Verfahrens steht das zumindest eine Isolationselementim Wesentlichen mit der gesamten freien axialen Seitenfläche der zumindest einen Glasisolation in Kontakt. Dadurch kann die gesamte dem Abgas zugewandte axiale Seitenfläche der zumindest einen Glasisolation davor geschützt werden, mit dem Abgas in Kontakt zu gelangen und von dem Abgas korrodiert zu werden.

Vorteilhafterweise weist das Fertigformen der zumindest einen Glasisolation ein Erwärmen und Halten der zumindest einen Glasisolation auf einer vorbestimmten Temperatur für eine vorbestimmte Zeitdauer auf. Beispielsweise liegt die vorbestimmte Temperatur in einem Bereich zwischen ungefähr 600°C und ungefähr 1.000°C und die vorbestimmte Zeitdauer liegt in einem Bereich zwischen ungefähr 2 min und ungefähr 60 min.

Gemäß einer weiteren bevorzugten Ausgestaltung umfasst das erfindungsgemäße Verfahren ferner ein Anordnen von zumindest einer Guardelektrode, die mittels der zumindest einen Glasisolation von der ersten Elektrode und der zweiten Elektrode elektrisch isoliert ist. Die Guardelektrode ist vorzugsweise dazu ausgebildet, etwaige Leckströme abzuleiten, die zwischen der ersten Elektrode und der zweiten Elektrode über die Oberfläche der Glasisolation und/oder der Isolationselemente fließen.

Vorzugsweise sind mehrere Isolationselemente innerhalb des elektrostatischen Partikelsensors derart vorgesehen, dass im Wesentlichen sämtliche freien Flächen der Glasisolationen von den Isolationselementenbedeckt und folglich vom Abgas abgeschirmt sind. In vorteilhafter Weise sind also neben den dem Abgas zugewandten freien Flächen der Glasisolationen auch die dem Abgas abgewandten freien Flächen der Glasisolationen von den Isolationselementen im Wesentlichen bedeckt.

Gemäß einem weiteren Aspekt der vorliegenden Erfindung ist ein elektrostatischer Partikelsensor zur Verwendung in einem Abgasstrom einer Brennkraftmaschine vorgesehen. Der erfindungsgemäße Sensor weist zumindest eine sich entlang einer Längsachse erstreckende erste Elektrode, zumindest eine von der ersten Elektrode beabstandete und koaxial um die zumindest eine erste Elektrode angeordnete zweite Elektrode, zumindest eine sich von der zumindest einen ersten Elektrode zu der zumindest einen zweiten Elektrode koaxial ersteckende Glasisolation, die dazu ausgebildet ist, die zumindest eine erste Elektrode von der zumindest einen zweiten Elektrode elektrisch zu isolieren, und zumindest ein Isolationselement auf, das mit zumindest einem Bereich einer axialen Seitenfläche der zumindest einen Glasisolation in Kontakt steht.

Das zumindest eine Isolationselement ist dabei in bevorzugter Weise bereits während des Fertigformprozesses des zumindest einen Glaslots zu der zumindest einen Glasisolation vorhanden und verbleibt nach dem Fertigformen innerhalb des Sensors.

In besonders bevorzugter Weise steht das zumindest eine Isolationselement im Wesentlichen mit der gesamten, dem Abgas zugewandten freien axialen Seitenfläche der zumindest einen ersten Glasisolation in Kontakt. Dadurch kann im Wesentlichen die gesamte dem Abgas zugewandte axiale Seitenfläche der zumindest einen Glasisolation davor geschützt werden, mit dem Abgas in Kontakt zu gelangen und von dem Abgas korrodiert zu werden.

Der erfindungsgemäße elektrostatische Partikelsensor weist in einer weiteren Ausgestaltung zumindest eine Guardelektrode auf, die mittels der zumindest einen Glasisolation von der ersten Elektrode und der zweiten Elektrode elektrisch isoliert ist.

Das zumindest eine Isolationselement ist vorzugsweise aus einem Werkstoff mit sehr hohem elektrischen Widerstand gebildet, beispielsweise aus einem keramischen Werkstoff oder einem Glaswerkstoff mit einem Schmelzpunkt, der höher als der Schmelzpunkt der Glasisolation ist. Vorzugweise ist das zumindest eine Isolationselement aus Al₂O₃ gebildet.

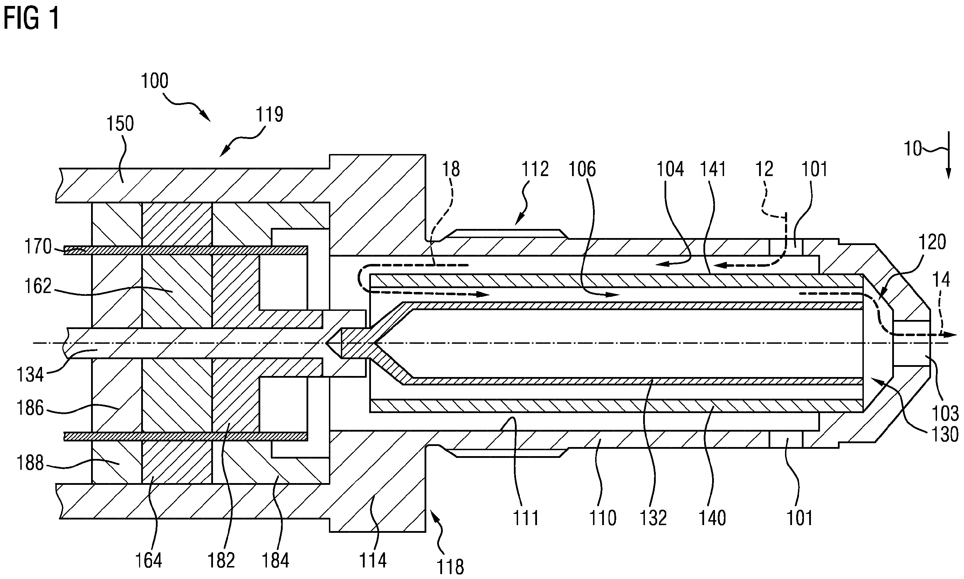

Weitere Merkmale und Aufgaben der vorliegenden Erfindung werden dem Fachmann durch Ausüben der vorliegenden Lehre und Betrachten der einzigen beiliegenden Zeichnung ersichtlich, in der die Fig. 1 eine Schnittansicht entlang einer Längsachse eines erfin dungsgemäßen elektrostatischen Partikelsensors zeigt.

Im Rahmen der vorliegenden Offenbarung werden die Begrifflichkeiten "Glaslot" und "Glasisolation" verwendet. Der Begriff "Glaslot" beschreibt im Rahmen der vorliegenden Offenbarung einen Ursprungszustand der "Glasisolation" und ist eine aus einem Glaswerkstoff bestehende Masse, die mittels Erwärmen und Halten auf einer vorbestimmten Temperatur für eine vorbestimmte Zeitdauer zumindest teilweise zur Glasisolation aushärtet. Folglich beschreibt der Begriff "Glasisolation" einen fertigen Zustand des Glaslots und ist ein im Wesentlichen fester Körper, der aus der Glaslotwerkstoffmasse gebildet worden ist.

Insbesondere wird das ursprüngliche Glaslot aus einem Glaspulver gebildet, das mittels Pressen und Sintern zu einem Pressling verarbeitet wird. Dieser Pressling beschreibt also das Glaslot, das mittels des hierin beschriebenen Verfahrens zur Glasisolation verarbeitet wird. Dabei ist die Glasisolation zu einem überwiegend Anteil kristallisiert und beschreibt somit keinen vollständig amorphen Gegenstand.

Ferner beschreibt im Rahmen der vorliegenden Offenbarung der Begriff "Fertigformen" einen Aushärte- bzw. Fertigformprozess des Glaslots bei einer vorbestimmten Temperatur für eine vorbestimmte Zeitdauer. Beispielsweise erfolgt das Fertigformen bei einer Temperatur zwischen ungefähr 600°C und ungefähr 1. 000°C für eine vorbestimmte Zeitdauer von ungefähr 2 min bis ungefähr 60 min.

Unter Verweis auf die Fig. 1 ist eine Schnittansicht durch einen Partikelsensor 100 dargestellt, der dazu ausgebildet ist, die Partikelmenge in einem Abgasstrom einer Brennkraftmaschine (nicht gezeigt) zu ermitteln. Der Partikelsensor 100 der Fig. 1 weist ein im Wesentlichen zylindrisches Gehäuse 110 auf, das sich entlang einer Längsachse 102 erstreckt. In weiteren Ausgestaltungen kann das Gehäuse 110 konisch oder gestuft ausgebildet sein.

Das Gehäuse 110 weist ferner einen Gewindeabschnitt 112 auf, mittels dem der Partikelsensor 100 beispielsweise in einen Abgaskanal einer Brennkraftmaschine (nicht dargestellt) eingeschraubt werden kann. Das Gehäuse 110 weist ferner einen Bereich 114 auf, beispielsweise in der Form eines Außensechskants, an dem ein entsprechendes Werkzeug angesetzt werden kann, damit der Partikelsensor 100 in den Abgaskanal der Brennkraftmaschine wie gewünscht eingeschraubt werden kann.

Innerhalb des Gehäuses 110 ist ein Messbereich 120 vorgesehen, der sich zwischen einem ersten Gehäusebereich 116, der dazu ausgebildet ist, in einem eingebauten Zustand des Partikelsensors 100 zumindest teilweise in einen Gasstrom (angedeutet mit einem Pfeil 10 in der Fig. 1), der durch den Abgaskanal der der Brennkraftmaschine strömt, zumindest teilweise hervorzustehen, und einem zweiten Gehäusebereich 118 im Wesentlichen entlang der Längsachse 102 erstreckt. Insbesondere beschreibt der erste Gehäusebereich 116 einen vorderen Endbereich des Gehäuses 110 und der zweite Gehäusebereich 118 beschreibt einen vom ersten Gehäusebereich 116 beabstandeten hinteren Gehäusebereich des Gehäuses 110. Genauer gesagt wird der Messbereich 120 durch den ersten Gehäusebereich 116 und den zweiten Gehäusebereich 118 in einer Richtung parallel zur Längsachse 102 festgelegt bzw. definiert.

Das Gehäuse 110 weist ferner einen weiteren, sich entlang der Längsachse 102 nach hinten erstreckenden und dem ersten Gehäusebereich 116 gegenüberliegenden dritten Gehäusebereich 119 auf. Im dritten Gehäusebereich 119 sind weitere Elemente, beispielsweise Kontaktelement zur elektrischen Kontaktierung des Sensors 100, untergebracht.

Im Messbereich 120 ist eine im Wesentlichen zylindrische erste Elektrode 130 angeordnet, die sich im Wesentlichen entlang der Längsachse 102 erstreckt. In weiteren Ausgestaltungen kann die erste Elektrode 130 konisch oder stufig ausgebildet sein. Die erste Elektrode 130 umfasst einen innerhalb des Messbereichs 120 angeordneten Messabschnitt 132 sowie einen sich entlang der Längsachse 102 durch den zweiten Gehäusebereich 118 in den dritten Gehäusebereich 119 erstreckenden Verbindungsabschnitt 134. Der Messabschnitt 132 ist beispielsweise ein hohlzylindrischer Bereich und mit dem Verbindungsabschnitt 134 starr verbunden. Alternativ kann der Messabschnitt 132 mit dem Verbindungsabschnitt 134 integral bzw. einteilig ausgebildet sein. Über den Verbindungsabschnitt 134 kann die erste Elektrode 130 z. B. mit einer Steuereinheit des Fahrzeugs verbunden und mit Strom beaufschlagt werden.

Ferner weist der Partikelsensor 100 gemäß der in der Fig. 1 dargestellten Ausführungsform ein im Wesentlichen zylindrisches Strömungsleitelement 140 auf, das im Messbereich 120 bezüglich der Längsachse 102 in radialer Richtung außerhalb der ersten Elektrode 130 und koaxial zu dieser angeordnet ist. In weiteren Ausgestaltungen kann das Strömungsleitelement 140 eine konische oder gestufte Form aufweisen. Insbesondere ist das Strömungsleitelement 140 um den Messabschnitt 132 der ersten Elektrode 130 derart angeordnet, dass ein erster Strömungspfad 100 zwischen einer radialen Innenwand 111 des Gehäuses 110 und einer radialen Außenwand 141 des Strömungsleitelements 140 derart gebildet wird, dass der Gasstrom durch den ersten Strömungspfad 104 vom ersten Gehäusebereich 116 in Richtung des zweiten Gehäusebereichs 118 strömt, und ein zweiter Strömungspfad 106 zwischen der ersten Elektrode 130 und dem Strömungsleitelement 140 derart gebildet wird, dass der Gasstrom durch den zweiten Strömungspfad 106 vom zweiten Gehäusebereich 118 in Richtung des ersten Gehäusebereichs 116 strömt.

In der Fig. 1 ist die Strömungsrichtung des Gasstroms durch den ersten Strömungspfad 104 mit einem Pfeil 12 angedeutet und die Strömungsrichtung durch den zweiten Strömungspfad 106 mit einem Pfeil 14 angedeutet. Der Übergang des Gasstroms aus dem ersten Strömungspfad 104 in den zweiten Strömungspfad 106 ist mit einem Pfeil 18 angedeutet.

Damit der Gasstrom 10 durch den Messbereich 120 strömen kann, weist das Gehäuse 110 im ersten Gehäusebereich 116 zumindest eine Einlassöffnung 101, die im Mantel des Gehäuses 110 vorgesehen ist, sowie eine sich beispielweise entlang der Längsachse 102 erstreckende Auslassöffnung 103 auf.

In dem in der Fig. 1 gezeigten Beispiel bildet das Gehäuse 110 gleichzeitig eine zweite Elektrode 150, die vorzugsweise als Masseelektrode ausgebildet ist. Während des Betriebs des elektrostatischen Partikelsensors 100 wird an der ersten Elektrode 130 ein erstes Spannungspotential angelegt, beispielsweise 1.000 V, das weit oberhalb eines zweiten Spannungspotentials liegt, das an der zweiten Elektrode 150 anliegt, beispielsweise 0 V.

Der Fig. 1 kann weiter entnommen werden, dass die erste Elektrode 130, genauer gesagt der Verbindungsabschnitt 34 der ersten Elektrode 130, von der zweiten Elektrode 150 durch eine erste Glasisolation 162 und eine zweite Glasisolation 164 elektrisch isoliert ist. Das Vorhandensein von zwei Glasisolationen 162, 164 ist der Tatsache geschuldet, dass der in der Fig. 1 dargestellte elektrostatische Partikelsensor 100 ferner eine Guardelektrode 170 aufweist, die von der ersten Elektrode 130 und der zweiten Elektrode 150 mittels der Glasisolation 165, 164 elektrisch isoliert und dazu ausgebildet ist, etwaige innerhalb des Sensors auftretende Leckströme abzuleiten. Die Guardelektrode 170 ist in dem in der Fig. 1 gezeigten Beispiel ein koaxial zur Längsachse 102 angeordnetes rohrförmiges Bauteil.

Die Glasisolationen 162, 164 werden auf der einen axialen Seite von Isolationselement 182, 184, die beispielsweise aus einem keramischen Werkstoff gebildet sind, bedeckt und von diesen zumindest teilweise in einer vorbestimmten Position gehalten. Auf der anderen axialen Seite werden die Glasisolationen 162, 164 von zwei weiteren Isolationselementen 186, 188 bedeckt und zumindest teilweise in Position gehalten. Folglich werden die Glasisolationen 162, 164 in Bezug auf die Längsachse 102 in radialer Richtung von der ersten Elektrode 130, der Guardelektrode 170 und der zweiten Elektrode 150 und in axialer Richtung von den jeweiligen Isolationselementen 182, 184, 186, 188 bedeckt und weisen somit nahezu keine für das Abgas zugängliche Flächen auf.

Die Isolationselemente 182, 184, 186, 188 verbleiben auch während des Messbetriebs des elektrostatischen Partikelsensors 100 und sind dazu ausgebildet, die Glasisolationen 162, 164 zumindest teilweise davor zu bewahren, dass Abgas mit diesen in Kontakt gelangt und die Glasisolationen 162, 164 dadurch zumindest teilweise korrodiert werden.

Im Folgenden wird ein beispielhafter Herstellungsprozess des elektrostatischen Partikelsensors 100 der Fig. 1 erläutert.

Zunächst wird die erste Elektrode 130 samt dem Messabschnitt 132 und dem Verbindungsabschnitt 134 in einer Form positioniert, in der bereits die erste Elektrode 150, die gleichzeitig im gezeigten Beispiel auch das Gehäuse 110 des elektrostatischen Partikelsensors 100 bildet, eingelegt ist. Daraufhin werden die beiden Isolationselemente 182, 184 zusammen mit der Guardelektrode 170 in der Form angeordnet.

In einem darauffolgenden Verfahrensschritt wird das Glaslot 162 zwischen der ersten Elektrode 130 und der Guardelektrode 170 und ein weiteres Glaslot 164 zwischen der Guardelektrode 170 und der zweiten Elektrode 150 derart angeordnet, dass die beiden Glaslote 162, 164, die in diesem Zustand aus einer Glasmasse bestehen, mit dem jeweiligen Isolationselement 182, 184 in Kontakt stehen. Die Glaslote 162, 164 werden dabei von den Isolationselementen 182, 184 zumindest teilweise in einer gewünschte Form gehalten. In diesem Zustand sind die Glaslote 162, 164 in einer ersten axialen Richtung (in der Fig. 1 in der Richtung nach rechts) positioniert.

Daraufhin werden zur weiteren Positionierung und Formung der Glaslote 162, 164 die weiteren Isolationselemente 186, 188 zwischen der ersten Elektrode 130 und die Guardelektrode 170 und zwischen der Guardelektrode 170 und der zweiten Elektrode 150 angeordnet und wiederum mit den Glasloten 162, 164 in Kontakt gebracht. In diesem Zustand sind die Glaslote 162, 164 auch in einer zur ersten axialen Richtung entgegengesetzten zweiten axialen Richtung (in der Fig. 1 in der Richtung nach links) positioniert.

Die Isolationselemente 182, 184, 186, 188 können beispielsweise durch konstruktive Maßnahmen, wie Presspassungen, Formschluss oder dergleichen, oder durch ein Auflegen von Gewichten auf diesen während des Fertigformens in Position gehalten werden. Die Isolationselemente 182, 184, 186, 188 definieren somit zumindest teilweise die Form der Glaslote 162, 164 und positionieren die Glasloste 162, 164 relativ zur ersten Elektrode 130 und zur zweiten Elektrode 150.

Die Positionierung der Glaslote 162, 164 in radialer Richtung erfolgt durch die bereits in der Form angeordneten erste Elektrode 130, der Guardelektrode 170 und der zweiten Elektrode 150.

Nach dem Anordnen sämtlicher Bauteile innerhalb der Form wird diese Anordnung auf eine vorbestimmte Temperatur erwärmt, beispielsweise auf einer Temperatur zwischen ungefähr 600°C und ungefähr 1.000°C, und für eine vorbestimmte Zeitspanne bei dieser vorbestimmten Temperatur gehalten, beispielsweise für eine Zeitdauer zwischen ungefähr 2 min und ungefähr 60 min. Das Erwärmen und Halten dieser Anordnung, insbesondere der Glaslote, auf der vorbestimmten Temperatur für eine vorbestimmte Zeitdauer wird im Rahmen der vorliegenden Offenbarung als "Fertigformen" bezeichnet. Während dieses Fertigform- bzw. Backprozesses entstehen aus den vorübergehend zähflüssigen Glaslotmassen im Wesentlichen feste Glasisolationen 162, 164.

Nach dem Fertigformprozess der Glasisolationen 162, 164 verbleiben sämtliche Isolationselemente 182, 184, 186, 188 innerhalb des dritten Gehäusebereichs 119 und werden, entgegen der aus dem Stand der Technik gängigen Praxis bei Verwendung von Graphitformelementen, nicht entnommen. Dabei haften die Isolationselemente 182, 184, 186, 188 nach dem Einglasen fest an den Glasisolationen 162, 164.

Die Isolationselemente 182, 184, 186, 188 bieten den Vorteil, dass die Glasisolationen 162, 164 im Wesentlichen vollständig vom Abgas abgeschirmt sind und somit das Abgas die Glasisolationen 162, 164 nicht korrodieren können. Außerdem ist gegenüber dem Stand der Technik vorteilhaft, dass keinerlei Graphit in bzw. an den Glasloten bzw. Glasisolationen 162, 164 verbleiben können, die während des Betriebs des Sensors 100 zu einer negativen Beeinträchtigung der Isolationseigenschaften der Glasisolationen 162, 164 führen können.

Ferner vergrößern die Isolationselemente 182, 184, 186, 188 die Kriechstrecke der Glasisolationen 162, 164 in axialer Richtung. Dadurch kann die Langlebigkeit der Glasisolationen 162, 164 verbessert werden.

## Patentansprüche

1. Verfahren zum Herstellen eines elektrostatischen Partikelsensors (100), der dazu ausgebildet ist, in einem Abgasstrom einer Brennkraftmaschine verwendet zu werden, wobei der elektrostatische Partikelsensor (100) zumindest eine sich entlang einer Längsachse (102) erstreckende erste Elektrode (130) und zumindest eine von der ersten Elektrode beabstandete und koaxial um die zumindest eine erste Elektrode (130) angeordnete zweite Elektrode (150) aufweist, wobei das Verfahren die Schritte umfasst:
- Anordnen von zumindest einem Glaslot (162, 164) in einer Form derart, dass sich das zumindest eine Glaslot (162, 164) von der zumindest einen ersten Elektrode (130) zu der zumindest einen zweiten Elektrode (150) radial erstreckt und die zumindest eine erste Elektrode (130) von der zumindest einen zweiten Elektrode (150) elektrisch isoliert wird,
- Anordnen von zumindest einem Isolationselement (182, 184, 186, 188) in der Form derart, dass das zumindest eine Isolationselement (182, 184, 186, 188) mit zumindest einem Bereich einer axialen Seitenfläche des zumindest einen Glaslots (162, 164) in Kontakt steht, und
- Fertigformen des zumindest einen Glaslots (162, 164) zu zumindest einer Glasisolation (162 , 164) derart, dass die zumindest eine Glasisolation (162, 164) zusammen mit dem zumindest einen Isolationselement (182, 184, 186, 188) relativ zu der zumindest einen ersten Elektrode (130) und der zumindest einen zweiten Elektrode (150) in einer vorbestimmten Position positioniert sind, wobei das Isolationselement (182, 184, 186, 188) dazu ausgebildet ist, während dem Fertigformen der zumindest einen Glasisolation (162, 164) die zumindest eine Glasisolation (162, 164) zumindest teilweise zu formen und während eines Messbetriebs des Sensors (100) die zumindest eine Glasisolation (162, 164) zumindest teilweise vom Abgas der Brennkraftmaschine zu isolieren.

2. Verfahren nach Anspruch 1, wobei das zumindest eine Isolationselement (182, 184, 186, 188) im Wesentlichen mit der gesamten freien axialen Seitenfläche der zumindest einen Glasisolation (162, 164) in Kontakt steht.

3. Verfahren nach einem der vorhergehenden Ansprüche, wobei das Fertigformen der zumindest einen Glasisolation (162, 164) ein Erwärmen und Halten der zumindest einen Glasisolation (162, 164) auf einer vorbestimmten Temperatur für eine vorbestimmte Zeitdauer aufweist.

4. Verfahren nach einem der vorhergehenden Ansprüche, ferner mit:
- Anordnen von zumindest einer Guardelektrode (170), die mittels der zumindest einen Glasisolation (162, 164) von der ersten Elektrode (130) und der zweiten Elektrode (150) elektrisch isoliert ist.

5. Elektrostatischer Partikelsensor (100) zur Verwendung in einem Abgasstrom einer Brennkraftmaschine zum Ermitteln der Partikelmenge im Abgasstrom, wobei der Sensor (100) aufweist:
- zumindest eine sich entlang einer Längsachse (102) erstreckende erste Elektrode (130),
- zumindest eine von der ersten Elektrode (130) beabstandete und koaxial um die zumindest eine erste Elektrode (130) angeordnete zweite Elektrode (150),
- zumindest eine sich von der zumindest einen ersten Elektrode (130) zu der zumindest einen zweiten Elektrode (150) radial erstreckende Glasisolation (162, 164), die dazu ausgebildet ist, die zumindest eine erste Elektrode (130) von der zumindest einen zweiten Elektrode (150) elektrisch zu isolieren, und **dadurch gekennzeichnet, dass** der Sensor (100)
- zumindest ein Isolationselement (182, 184, 186, 188) aufweist, das mit zumindest einem Bereich einer axialen Seitenfläche der zumindest einen Glasisolation (162, 164) in Kontakt steht.

6. Elektrostatischer Partikelsensor (100) nach Anspruch 5 wobei das zumindest eine Isolationselement (182, 184, 186, 188) im Wesentlichen mit der gesamten freien axialen Seitenfläche der zumindest einen Glasisolation (162, 164) in Kontakt steht.

7. Elektrostatischer Partikelsensor (100) nach einem der Ansprüche 5 bis 7, ferner mit zumindest einer Guardelektrode (170), die mittels der zumindest einen Glasisolation (162, 164) von der ersten Elektrode (130) und der zweiten Elektrode (150) elektrisch isoliert ist.

## Claims

1. Method for the production of an electrostatic particle sensor (100) which is designed to be used in an exhaust gas stream of an internal combustion engine, wherein the electrostatic particle sensor (100) has at least one first electrode (130) extending along a longitudinal axis (102) and at least one second electrode (150) which is at a distance from the first electrode and is arranged coaxially around the at least one first electrode (130), wherein the method comprises the steps of:
- arranging at least one glass solder (162, 164) in a mould in such a way that the at least one glass solder (162, 164) extends radially from the at least one first electrode (130) to the at least one second electrode (150), and the at least one first electrode (130) is electrically insulated from the at least one second electrode (150),
- arranging at least one insulating element (182, 184, 186, 188) in the mould in such a way that the at least one insulating element (182, 184, 186, 188) is in contact with at least one region of an axial side surface of the at least one glass solder (162, 164), and
- finish moulding the at least one glass solder (162, 164) into at least one glass insulator (162, 164) in such a way that the at least one glass insulator (162, 164), together with the at least one insulating element (182, 184, 186, 188), is positioned in a predetermined position relative to the at least one first electrode (130) and the at least one second electrode (150), wherein the insulating element (182, 184, 186, 188) is designed to at least partially shape the at least one glass insulator (162, 164) during the finish moulding of the at least one glass insulator (162, 164) and to at least partially isolate the at least one glass insulator (162, 164) from the exhaust gas of the internal combustion engine during a measuring operation of the sensor (100).

2. Method according to Claim 1, wherein the at least one insulating element (182, 184, 186, 188) is substantially in contact with the entire free axial side surface of the at least one glass insulator (162, 164).

3. Method according to one of the preceding claims, wherein the finish moulding of the at least one glass insulator (162, 164) comprises heating the at least one glass insulator (162, 164) and keeping it at a predetermined temperature for a predetermined period of time.

4. Method according to any one of the preceding claims, further comprising:
- arranging at least one guard electrode (170) which is electrically insulated from the first electrode (130) and the second electrode (150) by means of the at least one glass insulator (162, 164).

5. Electrostatic particle sensor (100) for use in an exhaust gas stream of an internal combustion engine for determining the particle quantity in the exhaust gas stream, wherein the sensor (100) comprises:
- at least one first electrode (130) extending along a longitudinal axis (102),
- at least one second electrode (150) which is at a distance from the first electrode (130) and is arranged coaxially around the at least one first electrode (130),
- at least one glass insulator (162, 164) which extends radially from the at least one first electrode (130) to the at least one second electrode (150) and is designed to electrically insulate the at least one first electrode (130) from the at least one second electrode (150), and **characterized in that** the sensor (100) has
- at least one insulating element (182, 184, 186, 188) which is in contact with at least one region of an axial side surface of the at least one glass insulator (162, 164).

6. Electrostatic particle sensor (100) according to Claim 5, wherein the at least one insulating element (182, 184, 186, 188) is substantially in contact with the entire free axial side surface of the at least one glass insulator (162, 164).

7. Electrostatic particle sensor (100) according to one of Claims 5 to 7, further having at least one guard electrode (170) which is electrically insulated from the first electrode (130) and the second electrode (150) by means of the at least one glass insulator (162, 164).

## Revendications

1. Procédé de production d'un capteur de particules électrostatique (100) qui est conçu pour être utilisé dans un flux de gaz d'échappement d'un moteur à combustion interne, le capteur de particules électrostatique (100) comportant au moins une première électrode (130) qui s'étend le long d'un axe longitudinal (102) et au moins une deuxième électrode (150) qui est espacée de la première électrode et qui est disposée coaxialement autour de l'au moins une première électrode (130), le procédé comprenant les étapes suivantes :
- disposer au moins une brasure de verre (162, 164) dans un moule de manière à ce que l'au moins une brasure de verre (162, 164) s'étende radialement de l'au moins une première électrode (130) à l'au moins une deuxième électrode (150) et l'au moins une première électrode (130) soit isolée électriquement de l'au moins une deuxième électrode (150),
- disposer au moins un élément isolant (182, 184, 186, 188) dans le moule de manière à ce que l'au moins un élément isolant (182, 184, 186, 188) soit en contact avec au moins une zone d'une surface latérale axiale de l'au moins une brasure de verre (162, 164), et
- effectuer un moulage final de l'au moins une brasure de verre (162, 164) sur au moins un isolant en verre (162, 164) de manière à ce que l'au moins un isolant en verre (162, 164) soit positionné conjointement avec l'au moins un élément isolant (182, 184, 186, 188) dans une position prédéterminée par rapport à l'au moins une première électrode (130) et l'au moins une deuxième électrode (150), l'élément isolant (182, 184, 186, 188) étant conçu pour former au moins partiellement l'au moins un isolant en verre (162, 164) pendant le moulage final de l'au moins un isolant en verre (162, 164) et isoler au moins partiellement l'au moins un isolant en verre (162, 164} des gaz d'échappement du moteur à combustion interne pendant une opération de mesure du capteur (100).

2. Procédé selon la revendication 1, l'au moins un élément isolant (182, 184, 186, 188) étant sensiblement en contact avec la totalité de la surface latérale axiale libre de l'au moins un isolant en verre (162, 164).

3. Procédé selon l'une des revendications précédentes, le moulage final de l'au moins un isolant en verre (162, 164) comprenant le chauffage et le maintien de l'au moins un isolant en verre (162, 164) à une température prédéterminée pendant une durée prédéterminée.

4. Procédé selon l'une des revendications précédentes, comprenant en outre l'étape suivante :
- disposer au moins une électrode de garde (170) qui est isolée électriquement de la première électrode (130) et de la deuxième électrode (150) au moyen de l'au moins un isolant en verre (162, 164).

5. Capteur de particules électrostatique (100) destiné à être utilisé dans un flux de gaz d'échappement d'un moteur à combustion interne pour déterminer la quantité de particules dans le flux de gaz d'échappement, le capteur (100) comprenant :
- au moins une première électrode (130) qui s'étend le long d'un axe longitudinal (102),
- au moins une deuxième électrode (150) qui est espacée de la première électrode (130) et qui est disposée coaxialement autour de l'au moins une première électrode (130),
- au moins un isolant en verre (162, 164) qui s'étend radialement de l'au moins une première électrode (130) à l'au moins une deuxième électrode (150) et qui est conçu pour isoler électriquement l'au moins une première électrode (130) de l'au moins une deuxième électrode (150), **caractérisé en ce que** le capteur (100) comporte
- au moins un élément isolant (182, 184, 186, 188) qui est en contact avec au moins une zone d'une face latérale axiale de l'au moins un isolant en verre (162, 164).

6. Capteur de particules électrostatique (100) selon la revendication 5, l'au moins un élément isolant (182, 184, 186, 188) étant sensiblement en contact avec la totalité de la surface latérale axiale libre de l'au moins un isolant en verre (162, 164).

7. Capteur de particules électrostatique (100) selon l'une des revendications 5 à 7, comprenant en outre au moins une électrode de garde (170) qui est isolée électriquement de la première électrode (130) et de la deuxième électrode (150) au moyen de l'au moins un isolant en verre (162, 164).
